# EUROPÄISCHE PATENTSCHRIFT

(11) **EP 3 223 650 B1**
(45) Veröffentlichungstag und Bekanntmachung des Hinweises auf die Patenterteilung: **25.12.2019**
(21) Anmeldenummer: 15800717.9
(22) Anmeldetag: 18.11.2015
(51) Int. Cl.: A46B 3/00, A46B 9/06, A46B 3/04, A46D 3/04

(54) **VERFAHREN UND VORRICHTUNG ZUR HERSTELLUNG EINES INTERDENTALREINIGERS**
METHOD AND DEVICE FOR PRODUCING AN INTERDENTAL CLEANER
PROCÉDÉ ET DISPOSITIF DE FABRICATION D'UN NETTOYEUR INTER-DENTAIRE

(30) Priorität: 24.11.2014 DE 102014017257
(43) Veröffentlichungstag der Anmeldung: 04.10.2017
(73) Patentinhaber: Sunstar Suisse SA, 1163 Etoy (CH)
(72) Erfinder: BUTZ, Jürgen, 79677 Schönau (DE)
(74) Vertreter: Lichti - Patentanwälte Partnerschaft mbB
(86) Internationale Anmeldenummer: PCT/EP2015/002299
(87) Internationale Veröffentlichungsnummer: WO 2016/082921

(56) Entgegenhaltungen:
- EP-A1- 2 100 570
- WO-A1-2014/023395
- DE-A1-102005 008 289
- JP-A- 2006 212 136
- US-A1- 2014 008 837

## Beschreibung

Die Erfindung betrifft ein Verfahren zur Herstellung eines Interdentalreinigers gemäß den Oberbegriff des Anspruchs 9. Darüber hinaus betrifft die Erfindung eine Vorrichtung zur Herstellung eines entsprechenden Interdentalreinigers gemäß dem Oberbegriff des Anspruchs 1.

Ein entsprechender Interdentalreiniger wird häufig auch als Zahnstocher bezeichnet und ist beispielsweise in der EP 0 932 371 B1 bekannt. Der dort beschriebene Interdentalreiniger besitzt einen stabförmigen Träger aus einem formstabilen Kunststoff, der an seinem einen Ende ein Griffteil und an seinem axial entgegengesetzten Ende eine Reinigungseinrichtung in Form eines Überzugs des Trägers besitzt. Der Überzug besteht aus einem weich-elastischen Kunststoff, beispielsweise einem thermoplastischen Elastomer, und ist auf den Träger aufspritzt. Auf seiner Außenseite besitzt der Überzug eine Strukturierung in Form von Noppen oder sich radial nach außen erstreckenden Fingern. Zur Reinigung der Zahnzwischenräume ergreift ein Benutzer den Interdentalreiniger am Griffteil und führt den stabförmigen Träger mit dem den Überzug tragenden Ende in einen Zahnzwischenraum ein und bewegt den Interdentalreiniger in Axialrichtung hin und her, wodurch der Zahnzwischenraum gereinigt und eventuell vorhandene Partikel gelöst werden.

Es hat sich gezeigt, dass mit einem Interdentalreiniger des genannten Aufbaus eine gute Reinigung der Zahnzwischenräume möglich ist, jedoch ist es schwierig, Verunreinigungen oder Ablagerungen aus sehr engen, feinen Taschen des Gebisses zu entfernen. In der DE 10 2012 015 663 A1 wird deshalb ein Interdentalreiniger vorgeschlagen, dessen Reinigungseinrichtung einen Borstenbesatz mit mehreren mit radialer Komponente vom Überzug hervorstehenden Borstenbündeln und/oder Einzelborsten aufweist. Dabei kann die Reinigungseinrichtung alleine aus dem Borstenbesatz bestehen, es ist jedoch auch möglich, zusätzlich zu dem Borstenbesatz den weich-elastischen Überzug genannten Aufbaus vorzusehen.

Da die Abmessungen des Interdentalreinigers relativ klein sind, hat es sich als schwierig und technisch sehr aufwändig erwiesen, die Borsten bei der Herstellung des Interdentalreinigers in einer Spritzgussvorrichtung korrekt auszurichten und zu halten, damit sie beim Einspritzen des Kunststoffmaterials nicht verrutschen oder verschoben werden.

In der JP 2006-212136 A, von der im Oberbegriff der unabhängigen Ansprüche 1 und 9 ausgegangen wird, ist ein Satz von gespritzten Interdentalreinigern gezeigt, wobei ein Feld von Filament-Strängen durch endseitige Halter gespannt ist und die Filament-Stränge in voneinander beabstandeten Bereichen mit den jeweiligen Körpern der Interdentalreiniger umspritzt sind. Gemäß der JP 2006-212136 A sind die einzelnen Filament-Stränge des Filament-Feldes durch die Halter nebeneinander auf Abstand gehalten. Aufgrund des beim Spritzgießen auftretenden Spritzdrucks kann sich die gegenseitige Ausrichtung der Filament-Stränge verändern, so dass die gewünschte Konfiguration nicht sicher gewährleistet ist.

Aus der EP 2 100 570 A1 ist ein gleichartiges Verfahren bekannt, bei dem ebenfalls die genannten Probleme auftreten.

Der Erfindung liegt die Aufgabe zugrunde, ein Verfahren zur Herstellung eines Interdentalreinigers genannten Aufbaus zu schaffen, mit dem ein Borstenbesatz des Interdentalreinigers bei dessen Herstellung in einfacher Weise und zuverlässig positionierbar und fixierbar ist. Darüber hinaus soll eine Vorrichtung zur Herstellung eines entsprechenden Interdentalreinigers geschaffen werden, mit der sich das Verfahren in einfacher Weise ausführen lässt.

In vorrichtungstechnischer Hinsicht wird die genannte Aufgabe durch eine Vorrichtung mit den Merkmalen des Anspruchs 1 gelöst. Eine entsprechende Vorrichtung zur Herstellung eines entsprechenden Interdentalreiniger umfasst erfindungsgemäß eine Spritzgussvorrichtung, die zumindest eine Kavität für die Ausbildung mehrerer nebeneinander angeordneter stabförmiger Träger und eine Haltevorrichtung für ein aus mehreren Filament-Strängen gebildetes Filament-Feld aufweist. Die Haltevorrichtung weist dabei eine Halte-Kassette mit zumindest zwei voneinander beabstandeten Führungsteilen auf, in die die Filament-Stränge einsetzbar sind, wobei die Filamentstränge in der Haltevorrichtung so fixierbar sind, dass sie zwischen den Führungsteilen frei spannbar sind. Die Halte-Kassette ist in die Spritzgussvorrichtung einsetzbar und aus dieser entnehmbar und/oder umsetzbar.

Zusätzlich zu der Führung und Ausrichtung der Filament-Stränge in der Halte-Kassette sind die Filament-Stränge auch in der Spritzgussvorrichtung positioniert und geführt, wenn die Halte-Kassette in die Spritzgussvor-richtung eingesetzt ist. Zu diesem Zweck sind in der Spritzgussvorrichtung mehrere voneinander beabstandete 1. Positionierteile vorgesehen. Vorzugsweise weist jedes 1. Positionierteil mehrere nebeneinander angeordnete 1. Positionierschlitze auf, wobei jeder 1. Positionierschlitz zur Aufnahme genau eines Filament-Stranges ausgebildet sein kann.

Das aus mehreren Filament-Strängen gebildete Filament-Feld kann außerhalb der Spritzgussvorrichtung in die Halte-Kassette eingesetzt und in dieser fixiert werden. Dabei stellen die Führungsteile sicher, dass die Filament-Stränge in vorbestimmter Ausrichtung positioniert sind. Zu diesem Zweck können die Führungsteile mehrere nebeneinander angeordnete Führungsschlitze aufweisen, wobei jeder Führungsschlitz zur Aufnahme genau eines Filament-Strangs ausgebildet sein kann.

Die Fixierung der Filament-Stränge in der Halte-Kassette erfolgt vorzugsweise mittels eines Klemmteils, das die Filament-Stränge klemmend und somit kraftschlüssig in der Halte-Kassette fixiert.

In einer möglichen Ausgestaltung der Erfindung kann vorgesehen sein, dass die Halte-Kassette als Rahmen ausgebildet ist. Dabei kann der Rahmen beispielsweise C-förmig oder E-förmig ausgebildet sein. Im Falle eines C-förmigen Rahmens besitzt dieser eine Basis und zwei davon auskragende Schenkel, wobei die Filament-Stränge vorzugsweise zwischen den freien Enden der Schenkel parallel zur Basis verlaufen und gespannt sind. Wenn der Rahmen E-förmig ausgebildet ist, existiert noch ein zusätzlicher Mittelschenkel, so dass eine zusätzliche mittlere Abstützung für die Filament-Stränge vorhanden ist.

In der Spritzgussvorrichtung werden mehrere vorzugsweise parallel zueinander verlaufende stabförmige Träger aus einem Kunststoff-Material an das Filament-Feld bzw. die Filament-Stränge angespritzt. Zu diesem Zweck besitzt die Spritzgussvorrichtung eine Kavität mit mehreren Kavitätsabschnitten zur Ausbildung jeweils eines stabförmigen Trägers. Dabei kann vorgesehen sein, dass zwischen zwei benachbarten Kavitätsabschnitten jeweils zumindest ein 1. Positionierteil zur Positionierung der Filament-Stränge vorgesehen ist.

Um das Einführen der Filament-Stränge in die 1. Positionierteile zu erleichtern, kann in Weiterbildung der Erfindung vorgesehen sein, dass zumindest einige der 1. Positionierteile eine unterschiedliche Höhe aufweisen, wobei die Höhe in Einführrichtung der Filament-Stränge gemessen ist. Dies hat zur Folge, dass die Filament-Stränge beim Einsetzen bzw. Absenken der Halte-Kassette in die Spritzgussvorrichtung nicht alle gleichzeitig mit den ihnen zugeordneten 1. Positionierschlitzen in Eingriff kommen, sondern dass die Filament-Stränge zuerst in die 1. Positionierschlitze derjenigen 1. Positionierteile eingeführt werden, die die größte Höhe besitzen. Dadurch sind sie beim weiteren Absenk- bzw. Einsetzvorgang bereits zusätzlich geführt, bis sie auch in die 1. Positionierschlitze derjenigen 1. Positionierteile eingreifen, die die zweitgrößte Höhe besitzen. Durch diesen zeitlichen Versatz des Einführens der Filament-Stränge in die Positionierteile ist auch bei hoher Bewegungsgeschwindigkeit der Halte-Kassette ein sicheres Einsetzen der Filament-Stränge in die 1. Positionierteile gewährleistet.

In bevorzugter Weiterbildung der Erfindung kann vorgesehen sein, dass jeder Kavitätsabschnitt, der zur Ausbildung jeweils eines stabförmigen Trägers dient, seitliche Vertiefungen zur Aufnahme jeweils eines Filament-Stranges besitzt. Die Vertiefungen stellen sicher, dass die Filament-Stränge in den unmittelbar an den stabförmigen Träger angrenzenden Bereich zusätzlich geführt sind und dass die Filament-Stränge beim Schließen des Formwerkzeugs nicht geklemmt oder beschädigt werden. Eine undefinierte Bündelform, wie sie im Bereich der 1. Positionierschlitze vorliegt, wird in eine definierte Bündelform in den Vertiefungen umgelenkt.

Die Vertiefungen besitzen eine Breite B (gemessen in Längsrichtung des stabförmigen Trägers) die größer als eine Weite W der 1. Positionierschlitze der 1. Positionierteile ist. Dies führt dazu, dass die Filament-Stränge in ihren in dem 1. Positionierschlitz sitzenden Bereich enger und höher gefasst sind als in dem Bereich, der in den Vertiefungen der Kavität liegt. Dies bringt den Vorteil mit sich, dass der Füllgrad der Filamente bzw. Filament-Stränge in den Vertiefungen sehr hoch ist, was erforderlich ist, um eine Abdichtung zwischen den Filamenten und dem eingespritzten Kunststoff zu erreichen. Auf diese Weise können Überspritzungen in den Filamentbereich hinein verhindert werden. Darüber hinaus ist ein Klemmen, Quetschen oder eine Beschädigung der Filament-Stränge im geschlossenen Zustand der Spritzgussvorrichtung verhindert.

In einer möglichen Ausgestaltung kann vorgesehen sein, den stabförmigen Träger des Interdentalreinigers in einem weiteren Verfahrensschritt mit einem Überzug aus einem weich-elastischen Kunststoff zumindest in seinem vorderen Bereich zu überspritzen. Zu diesem Zweck kann vorgesehen sein, dass die Spritzgussvorrichtung oder eine weitere Spritzgussvorrichtung eine Umspritzungskavität aufweist, in der die stabförmigen Träger im Bereich des Filament-Feldes zumindest bereichsweise mit den weich-elastischem Kunststoff umspritzbar sind. Vorzugsweise besitzt die Umspritzungskavität mehrere Kavitätsabschnitte zur Bildung jeweils eines Überzugs und es sind mehrere voneinander beabstandete 2. Positionierteile vorgesehen, mit denen die Filament-Stränge positioniert und gehalten sind, wenn die Halte-Kassette mit dem Filament-Feld und den angespritzten stabförmigen Trägern in die Umspritzungskavität eingesetzt ist.

Auch die 2. Positionierteile können mehrere nebeneinander angeordnete 2. Positionierschlitze aufweisen, wobei jeder 2. Positionierschlitz zur Aufnahme genau eines Filament-Stranges ausgebildet sein kann.

Die 2. Positionierteile sollten in Längsrichtung der Filament-Stränge auf Abstand verteilt angeordnet sein. In bevorzugter Ausgestaltung der Erfindung ist vorgesehen, dass zwischen zwei benachbarten Kavitätsabschnitten der Umspritzungskavität jeweils ein 2. Positionierteil vorgesehen ist. Um das Einführen der Filament-Stränge in die 2. Positionierteile zu erleichtern, kann in Weiterbildung der Erfindung vorgesehen sein, dass zumindest einige der 2. Positionierteile eine unterschiedliche Höhe aufweisen, wobei die Höhe in Einführrichtung der Filament-Stränge gemessen ist. Dies hat zur Folge, dass die Filament-Stränge beim Einsetzen bzw. Absenken der Halte-Kassette in die Spritzgussvorrichtung nicht alle gleichzeitig mit den ihnen zugeordneten 2. Positionierschlitzen in Eingriff kommen, sondern dass die Filament-Stränge zuerst in die 2. Positionierschlitze derjenigen 2. Positionierteile eingeführt werden, die die größte Höhe besitzen. Dadurch sind sie beim weiteren Absenk- bzw. Einsetzvorgang bereits zusätzlich geführt, bis sie auch in die 2. Positionierschlitze derjenigen 2. Positionierteile eingreifen, die die zweitgrößte Höhe besitzen. Durch diesen zeitlichen Versatz des Einführens der Filament-Stränge in die Positionierteile ist auch bei hoher Bewegungsgeschwindigkeit der Halte-Kassette ein sicheres Einsetzen der Filament-Stränge in die 2. Positionierteile gewährleistet.

Nachdem die stabförmigen Träger an das Filament-Feld angespritzt sind und gegebenenfalls in einem nachfolgenden Schritt einem Überzug versehen wurden, müssen die stabförmigen Träger aus dem Filament-Feld herausgelöst werden. Zu diesem Zweck kann erfindungsgemäß eine Schneidvorrichtung vorgesehen sein, mittels der die stabförmigen Träger aus dem Filament-Feld herausschneidbar sind.

In verfahrenstechnischer Hinsicht wird die genannte Aufgabe durch ein Verfahren mit den Merkmalen des Anspruchs 9 gelöst. Dabei ist vorgesehen, dass ein Filament-Feld aus mehreren Filament-Strängen in eine Halte-Kassette eingesetzt und mittels zumindest einer Haltevorrichtung in vorbestimmter Ausrichtung in der Halte-Kassette fixiert wird. Anschließend wird die Halte-Kassette in eine Spritzgussvorrichtung eingesetzt und das Filament-Feld in der Spritzgussvorrichtung unter Bildung von mehreren auf Abstand nebeneinander angeordneten stabförmigen Trägern mit Kunststoff umspritzt. Abschließend werden die das Filament-Feld bildenden Filament-Stränge zumindest in den zwischen benachbarten stabförmigen Trägern liegenden Abschnitten durchtrennt, wodurch die stabförmigen Träger und somit die Interdentalreiniger von dem Filament-Feld freikommen bzw. dieses aufgelöst wird.

Die Erfindung geht von der Grundüberlegung aus, gleichzeitig mehrere Interdentalreiniger auszubilden und dafür nicht die Filamente oder Borsten jedes einzelnen Interdentalreinigers auszurichten, sondern ein Filament-Feld aus mehreren längeren, vorzugsweise parallel zueinander und auf Abstand nebeneinander angeordneten Filament-Strängen zu verwenden. Die genaue Positionierung und Fixierung des Filament-Feldes bzw. der Filament-Stränge ist verglichen mit der Handhabung der sehr kurzen Borsten-Zuschnitte wesentlich einfacher, sicherer und präziser. Erst wenn die Interdentalreiniger fertig gestellt sind, werden die die einzelnen Interdentalreiniger noch miteinander verbindenden Filament-Stränge geschnitten und durchtrennt, so dass an jedem einzelnen Interdentalreiniger ein radial oder zumindest mit radialer Komponente nach außen hervorstehender Borstenbesatz gebildet ist.

Wenn die einzelnen Filament-Stränge des Filament-Feldes in zumindest zwei beabstandeten Bereichen und vorzugsweise in ihren Endbereichen ihrer axialen Länge jeweils in eines der Führungsteile eingesetzt und fixiert sind, erstrecken sie sich zwischen den Führungsteilen gradlinig und unter Spannung. Dies sichert im unbelasteten Zustand eine exakte gegenseitige Positionierung der Filament-Stränge. Wenn die Filament-Stränge jedoch relativ lang sind und wenn das die stabförmigen Träger bildende Kunststoffmaterial mit hohem Druck in die entsprechende Kavität der Spritzgussvorrichtung eingebracht wird, kann es passieren, dass die Filament-Stränge sich relativ zueinander verschieben, wodurch eine exakte Positionierung nicht mehr gewährleistet wäre. Gemäß der Erfindung ist deshalb vorgesehen, dass jeder Filament-Strang des Filament-Feldes beim Einsetzen der Halte-Kassette in die Spritzgussvorrichtung in mehrere voneinander beabstandete, an der Spritzgussvorrichtung ausgebildete 1. Positionierteile eingesetzt wird. Die 1. Positionierteile können beispielsweise mehrere 1. Positionierschlitze aufweisen, wobei jeder Filament-Strang in einen der 1. Positionierschlitze der 1. Positionierteile vorzugsweise unter enger Passung eingesetzt wird. Auf diese Weise sind die Filament-Stränge auch an mehreren Stellen ihrer zwischen den Führungsteilen der Halte-Kassette frei gespannten Abschnitte exakt geführt und relativ zueinander positioniert, so dass eine unbeabsichtigte Verschiebung infolge äußerer Einflüsse bzw. infolge des Einspritzdrucks des die stabförmigen Träger bildenden Kunststoffmaterials zuverlässig vermieden ist.

Zur Fixierung des Filament-Feldes wird eine Halte-Kassette vorgesehen, die abseits der Spritzgussvorrichtung mit dem Filament-Feld bzw. dem Filament-Strängen bestückt werden kann. Dabei kann vorgesehen sein, dass jeder Filament-Strang in zumindest zwei beabstandeten Bereichen seiner axialen Länge jeweils in ein Führungsteil der Halte-Kassette eingesetzt und so fixiert wird, dass er zwischen den Führungsteilen frei gespannt ist. Die Führungsteile stellen sicher, dass die Filament-Stränge eine exakte Position und insbesondere eine genaue gegenseitige Ausrichtung besitzen.

In Weiterbildung der Erfindung kann vorgesehen sein, dass die Führungsteile jeweils mehrere Führungsschlitze aufweisen, wobei jeder Filament-Strang in einen der Führungsschlitze eingesetzt und durch diesen exakt positioniert wird.

Die mit dem Filament-Feld bzw. den Filament-Strängen bestückte Halte-Kassette wird in die Spritzgussvorrichtung eingesetzt und dort mit Kunststoff-Material umspritzt, das mehrere nebeneinander auf Abstand angeordnete stabförmige Träger bildet. Nach Öffnen der Spritzgussvorrichtung ist in der Halte-Kassette weiterhin das Filament-Feld eingespannt, wobei an dem Filament-Feld nunmehr mehrere unabhängige, nebeneinander angeordnete stabförmige Träger angebracht sind, die vorzugsweise senkrecht zur Längserstreckung der Filament-Stränge verlaufen.

Ein Filament-Strang kann beispielsweise von einem Monofilament, d.h. einem einzelnen Kunststoff-Faden, oder einem Monofilbündel, d.h. mehreren nebeneinander liegenden Kunststoff-Fäden gebildet sein. Alternativ ist es auch möglich, dass ein Filament-Strang von einem Multifilament gebildet ist, das aus mehreren nebeneinander verlaufenden Monofilamenten besteht, die miteinander verbunden sind oder nebeneinander liegen. Die einzelnen Filamente können dabei gradlinig und parallel zueinander verlaufen oder auch gedreht bzw. tordiert oder texturiert sein. Alternativ oder zusätzlich dazu kann vorgesehen sein, dass die einzelnen Filamente eines Filament-Strangs unterschiedliche Durch-messer aufweisen und/oder aus unterschiedlichen Materialien bestehen. Es ist jedoch auch möglich, dass die einzelnen Filamente innerhalb eines Filament-Strangs gleichartig ausgebildet sind, sich jedoch von den Filamenten eines benachbarten Filament-Strang hinsichtlich des Durchmessers und/oder des Materials unterscheiden.

Ein einfaches und zuverlässiges Einsetzen der Filament-Stränge in die 1. Positionierschlitze der 1. Positionierteile lässt sich erreichen, wenn die Oberseiten der 1. Positionierteile in Einführrichtung höhenmäßig versetzt zueinander angeordnet sind, so dass die Filament-Stränge beim Einsetzen bzw. Absenken der Haltekassette nicht gleichzeitig in alle ihre 1. Positionierschlitze eingeführt werden, sondern ein seitlicher Versatz gegeben ist.

In Weiterbildung der Erfindung kann vorgesehen sein, dass der stabförmige Träger an seinem den Borsten abgewandten Ende einen vorzugsweise plattenförmigen Griffabschnitt aufweist. Jeder stabförmige Träger kann jeweils unabhängig von den anderen stabförmigen Trägern als einzelträger ausgebildet sein, vorzugsweise ist jedoch vorgesehen, dass benachbarte stabförmige Träger an ihren Griffabschnitten einstückig miteinander verbunden werden. Dies kann beispielsweise dadurch geschehen, dass benachbarte stabförmige Träger an ihren Griffabschnitten über abbrechbare Stege miteinander verbunden werden. Wenn das in die Halte-Kassette eingespannte Filament-Feld mit den angespritzten stabförmigen Trägern aus der Spritzgussvorrichtung entnommen wird, sind die stabförmigen Träger an ihrem vorderen, dem Griffabschnitt abgewandten Ende einstückig mit dem Filament-Feld bzw. den Filament-Strängen verbunden und kragen senkrecht zu diesen frei aus. Wenn die stab-förmigen Träger zusätzlich in genannter Weise an ihren Griffabschnitten miteinander verbunden sind, ist eine zusätzliche Fixierung und gegenseitige Abstützung der stabförmigen Träger gegeben, so dass einerseits verhindert ist, dass einer der stabförmigen Träger aufgrund einer punktuellen äußeren Last ausknickt oder abbricht oder dass sich in sonstiger Weise relative Verschiebungen zwischen den stabförmigen Trägern einstellen. Die stabförmigen Träger sind somit in einer vorbestimmten relativen Position gehalten, was insbesondere dann vorteilhaft ist, wenn die Halte-Kassette nach der Entnahme aus der Spritzgussvor-richtung einer weiteren Arbeitsstation zugeführt wird, in der beispielsweise eine weitere Kunststoff-Komponente angespritzt werden kann oder in der ein Zuschnitt der Interdentalreiniger erfolgt.

Zum Anspritzen einer weiteren Kunststoff-Komponente kann erfindungsgemäß vorgesehen sein, dass die Halte-Kassette mit dem die stabförmigen Träger tragenden Filament-Feld entweder in der Spritzgussvorrichtung, in der die stabförmigen Träger angespritzt wurden, umgesetzt oder in eine weitere Spritzgussvorrichtung eingesetzt wird. Dabei werden die stabförmigen Träger vorzugsweise im Bereich des Filament-Feldes zumindest bereichsweise mit einem weich-elastischen Kunststoff, beispielsweise einem thermo-plastischen Elastomer oder Silikon, unter Bildung eines Überzugs umspritzt. Ein entsprechender Überzug kann beispielsweise das vordere, dem Griffabschnitt abgewandten Ende des stabförmigen Trägers hülsenförmig umgeben und außenseitig radial hervorstehende Vorsprünge oder Finger aufweisen.

Auch beim Einspritzen des weich-elastischen KunststoffMaterials zur Bildung des Überzuges sollte jeder Filament-Strang des Filament-Feldes sicher positioniert sein. Dies kann beispielsweise dadurch erreicht werden, dass jeder Filament-Strang des Filament-Feldes beim Ein- oder Umsetzen der Halte-Kassette in mehrere voneinander beabstandete, an der Spritzgussvorrichtung oder der weiteren Spritzgussvorrichtung ausgebildete 2. Positionierteile eingesetzt wird.

Dabei kann vorgesehen sein, dass jedes 2. Positionierteil mehrere 2. Positionierschlitze aufweist, wobei jeder Filament-Strang in einen der 2. Positionierschlitze der 2. Positionierteile vorzugsweise unter enger Passung eingesetzt wird.

Nach Ende der Spritzvorgänge ist eine Anordnung von mehreren nebeneinander angeordneten stabförmigen Trägern mit oder ohne Überzug gebildet, die über die Filament-Stränge noch miteinander verbunden sind. In einem Schneidvorgang werden die das Filament-Feld bildenden Filament-Stränge zumindest in den zwischen benachbarten stabförmigen Trägern liegenden Abschnitten und vorzugsweise auch in ihren Endbereichen beschnitten und durchtrennt. Dabei kann das Durchtrennen der Filament-Stränge direkt in der Halte-Kassette erfolgen, d.h. solange die Filament-Stränge noch in der Halte-Kassette fixiert sind. Alternativ ist es jedoch auch möglich, dass das die stabförmigen Träger tragende Filament-Feld vor dem Durchtrennen der Filament-Stränge aus der Halte-Kassette entnommen und der Schneidvorgang in einer separaten Arbeitsstation durchgeführt wird. Die leere Halte-Kassette kann dann mit neuen Filament-Strängen bestückt werden.

Vorzugsweise wird jeder stabförmige Träger durch zwei Schnitte, die beispielsweise in geringem Abstand parallel zu seiner Außenkontur bzw. der Außenkontur des Überzugs verlaufen, aus dem Filament-Feld herausgelöst, so dass an dem stabförmigen Träger ein radial nach außen hervorstehender Borstenbesatz gebildet ist.

Weitere Einzelheiten und Merkmale der Erfindung sind aus der folgenden Beschreibung von Ausführungsbeispielen unter Bezugnahme auf die Zeichnungen ersichtlich. Es zeigen.
- Fig. 1: Eine perspektivische Ansicht einer Gruppe von Interdentalreinigern mit einer vergrößerten Darstellung eines Reinigungsabschnitts,
- Fig. 2: eine perspektivische Ansicht einer Halte-Kassette mit eingesetztem Filament-Feld,
- Fig. 3: eine geöffnete, leere Halte-Kassette,
- Fig. 4: eine perspektivische Ansicht einer geöffneten Halte-Vorrichtung der Halte-Kassette,
- Fig. 5: ein Führungsteil mit mehreren unterschiedlichen eingesetzten Filament-Strängen,
- Fig. 6: eine perspektivische Ansicht einer abgewandelten Ausführungsform der Halte-Kassette,
- Fig. 7: eine perspektivische Ansicht einer geöffneten Spritzgussvorrichtung ohne Halte-Kassette,
- Fig. 8: eine perspektivische Ansicht einer geöffneten Spritzgussvorrichtung ohne Haltekassette mit einer speziellen Ausgestaltung der 1. Positionier teile,
- Fig. 9: eine vergrößerte perspektivische Ansicht eines 1. Positionierteils,
- Fig. 10: eine 1. alternative Ausgestaltung eines 1. Positionierteils,
- Fig. 11: eine 2. alternative Ausgestaltung eines 1. Positionierteils,
- Fig. 12: die Spritzgussvorrichtung gemäß Figur 7 mit eingelegter Halte-Kassette,
- Fig. 13: eine vergrößerte perspektivische Ansicht eines 1. Positionierteils mit eingelegten Filament-Strängen vor dem Schließen der Spritzgussvorrichtung,
- Fig. 14: die Ansicht gemäß Fig. 13 nach dem Schließen der Spritzgussvorrichtung,
- Fig. 15: eine perspektivische Ansicht einer Halte-Kassette mit angespritzten Trägern,
- Fig. 16: eine perspektivische Ansicht einer Umspritzungskavität mit eingesetzter Halte-Kassette und 2. Positionierteilen,
- Fig. 17: eine perspektivische Ansicht einer Halte-Kassette mit fertig gespritzten Interdentalreiniger,
- Fig. 18: die Halte-Kassette gemäß Figur 13 in geöffneter Stellung und
- Fig. 19: eine schematische Darstellung des Beschnitts der Filament-Stränge.

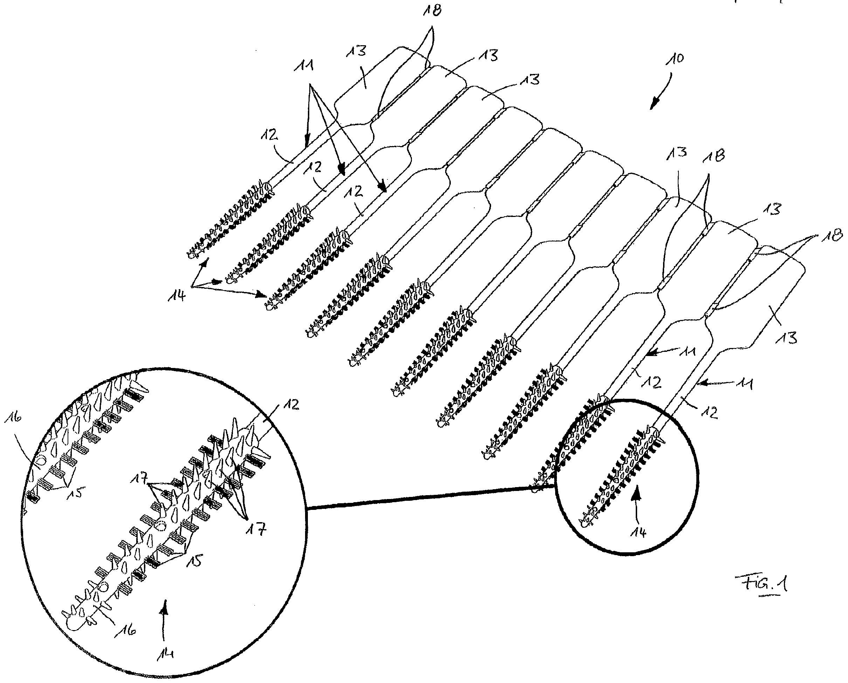

Figur 1 zeigt eine Gruppe 10 aus nebeneinander angeordneten Interdentalreinigern 11, wobei die Gruppe 10 gemäß Fig. 1 beispielhaft zehn Interdentalreiniger 11 umfasst. Jeder Interdentalreiniger 11 besteht aus Kunststoff und besitzt einen stabförmigen Träger 12, an dessen hinteren, gemäß Figur 1 rechten Ende ein plattenförmiger Griffabschnitt 13 ausgebildet und angeformt ist. Am vorderen, dem Griff-abschnitt 13 axial entgegengesetzten Ende ist auf dem stabförmigen Träger 12 ein Reinigungsabschnitt 14 ange-ordnet, der auf der linken Seite der Figur 1 in vergrößerter Darstellung ersichtlich ist. Der Reinigungs-abschnitt 14 weist einen Überzug 16 aus einem weich-elastischen Kunststoff auf, der an seiner Außenseite eine radial hervorstehende Strukturierung in Form von Fingern 17 oder Noppen trägt.

In das Material des stabförmigen Trägers 12 sind Borsten 15 eingebettet, die auf entgegengesetzten Seiten stummelartig in frei auskragender Weise radial hervorstehen.

Die nebeneinander angeordneten Interdentalreiniger 11 sind in ihren jeweiligen Griffabschnitten 13 über abbrechbare, einstückig angeformte Stege 18 miteinander verbunden, so dass die streifenförmige zusammenhängende Gruppe 10 gebildet ist und der Benutzer jeweils einen Interdentalreiniger 11 durch Abbrechen der entsprechenden Stege 18 entnehmen kann.

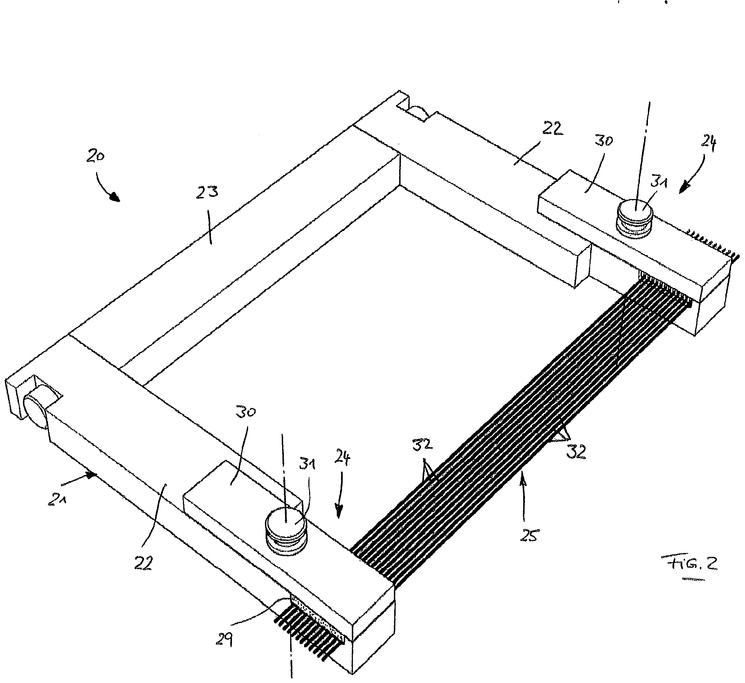

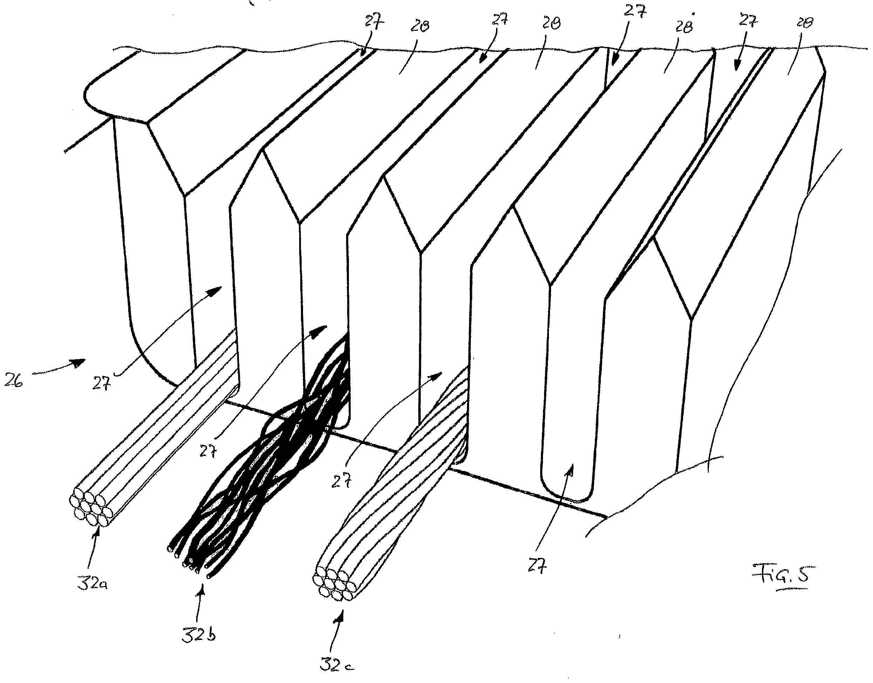

Im Folgenden wird beschrieben, wie die in Figur 1 dargestellte Gruppe 10 von Interdentalreinigern 11 hergestellt wird. Zu diesem Zweck ist eine Halte-Kassette 20 vorgesehen, die in den Figuren 2 bis 5 dargestellt ist. Die Halte-Kassette 20 ist als U-förmiger Rahmen 21 ausgebildet und besitzt eine Basis 23 sowie zwei sich senkrecht dazu erstreckende, frei auskragende Schenkel 22. An den äußeren, der Basis 23 abgewandten Enden der Schenkel 22 ist jeweils eine Haltevorrichtung 24 angeordnet, mittels der ein Filament-Feld 25, das aus mehreren parallel zueinander auf Abstand angeordneten Filament-Strängen 32 besteht, positioniert und fixiert werden kann. Wie Figur 5 zeigt, kann jeder Filament-Strang 32 entweder als ein Bündel 32a aus mehreren parallel zueinander verlaufenden geraden Filamenten oder von einem entsprechenden um seine Längsachse verdrehten Bündel 32c oder auch von nicht-parallel nebeneinander liegenden Monofilen in Form eines texturierten Bündels 32b gebildet sein.

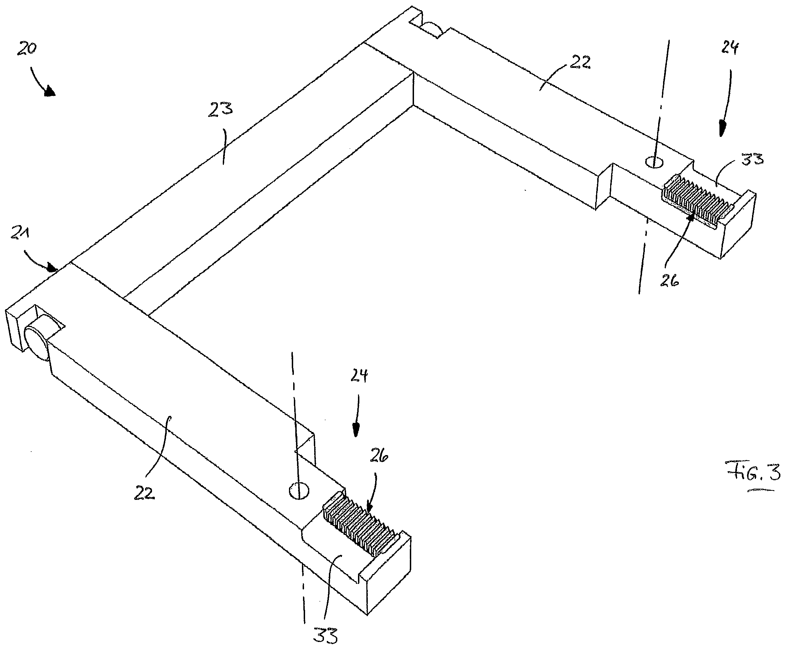

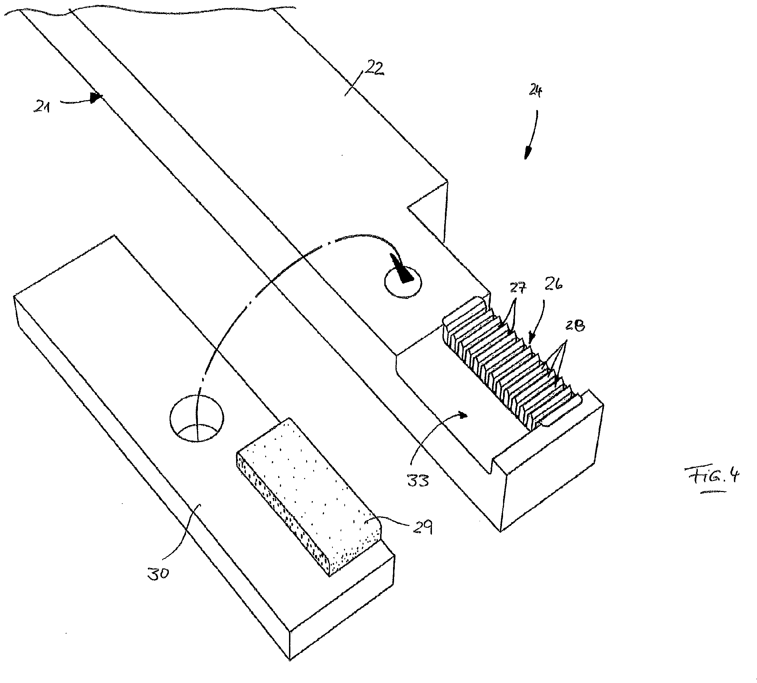

Wie insbesondere die Figuren 3 und 4 zeigen, umfasst jede Halte-Vorrichtung 24 ein Führungsteil 26, das kamm- oder rechenartig ausgebildet ist und mehrere nebeneinander angeordnete Führungslamellen 28 aufweist, zwischen denen jeweils ein Führungsschlitz 27 gebildet ist. In jeden Führungsschlitz 27 kann ein Filament-Strang 32 eingesetzt werden, so dass die Filament-Stränge 32 in vorbestimmter Weise positioniert und auf Abstand gehalten sind. Auf der dem jeweils anderen Führungsteil 26 abgewandten Seite des Führungsteils 26 ist an dem Schenkel 22 des Rahmens 21 eine Klemmfläche 33 ausgebildet, auf der die aus dem Führungsteil 26 hervorsehenden Endabschnitte der Filament-Stränge 32 aufliegen. Die Klemmfläche 33 wirkt zusammen mit einer Halteleiste 30, die auf ihrer Unterseite ein vorzugsweise kissenartiges Klemmteil 29 aufweist, das in seinen Abmessungen an die Abmessungen der Klemmfläche 33 angepasst ist. Die Halteleiste 30 kann so auf den Schenkel 22 des Rahmens 21 aufgelegt werden und mittels einer Spannvor-richtung beispielsweise in Form einer Spannschraube 31 festgespannt werden, so dass die Filament-Stränge 32 zwischen der Klemmfläche 33 und dem Klemmteil 29 fest eingespannt sind, wie es in Figur 2 dargestellt ist. Auf diese Weise sind die Filament-Stränge 32 in ihren End-bereichen kraftschlüssig gehalten und überspannen frei den Abstand zwischen den Schenkeln 22.

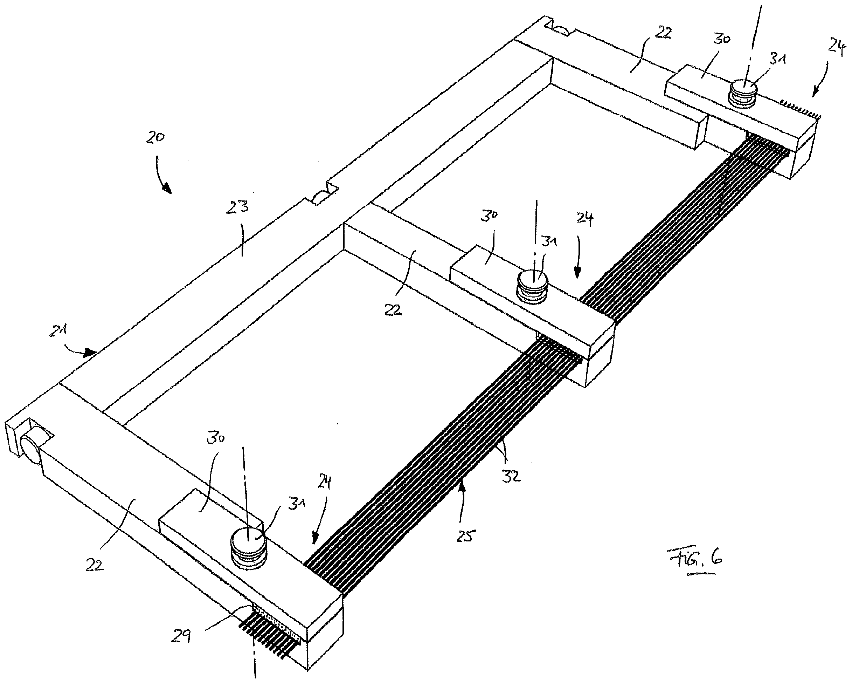

Figur 6 zeigt eine Abwandlung der Halte-Kassette 20 gemäß Figur 2, wobei der Rahmen 21 nunmehr E-förmig ausgebildet ist, d.h. einen zusätzlichen mittleren Schenkel 22 aufweist, so dass die Filament-Stränge 32 nicht nur in ihren Endbereichen sondern auch in ihrem mittleren Bereich mittels einer Halte-Vorrichtung 24 in beschriebener Weise positioniert und durch Klemmung gehalten sind.

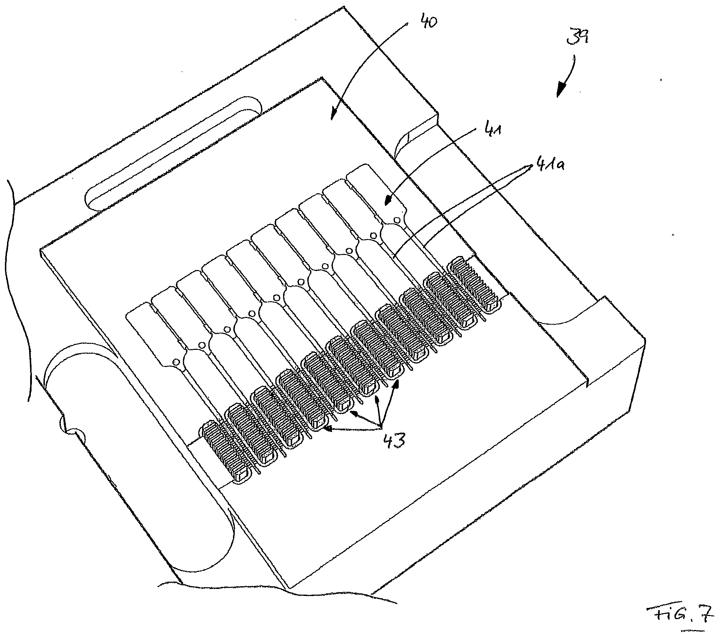

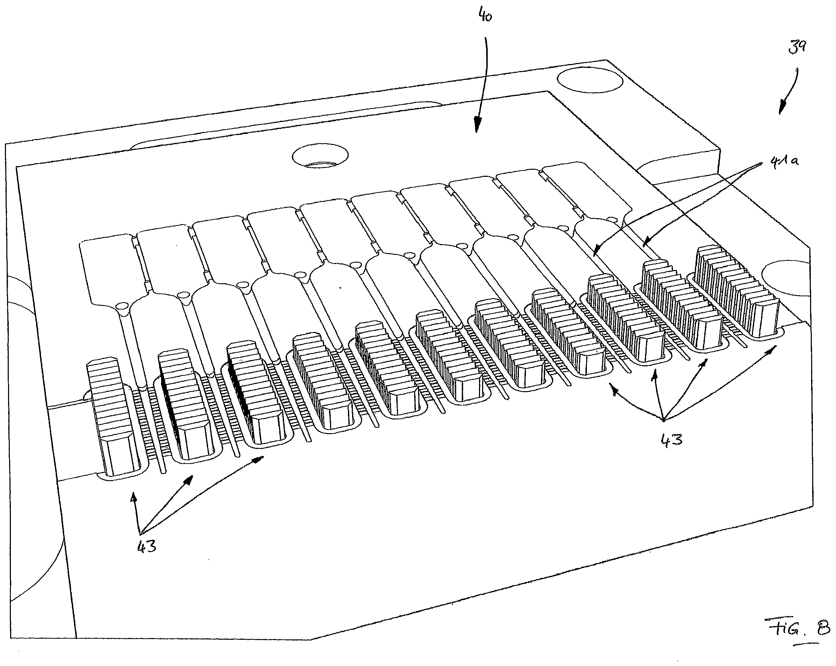

Figur 7 zeigt eine geöffnete Spritzgussvorrichtung 39 mit einem Formteil 40 bzw. einer Formhälfte, in der eine Kavität 41 entsprechend der Form von zehn nebeneinander angeordneten Interdentalreinigern 11 ausgebildet ist. Die Kavität 41 umfasst auch zehn Kavitätsabschnitte 41a, die jeweils der Ausbildung des stabförmigen Trägers 12 dienen. Im Bereich des vorderen Endes der Kavitätsabschnitte 41a sind zwischen den Kavitätsabschnitten 41a und zusätzlich seitlich neben den jeweils äußeren Kavitätsabschnitten 41a jeweils 1. Positionierteile 43 angeordnet. Während bei der Ausgestaltung gemäß Figur 7 alle 1. Positionierteile 43 die gleiche Höhe (gemessen in Einführrichtung und somit im wesentlichen senkrecht zur Zeichenebene gemäß Figur 7) besitzen, zeigt Figur 8 eine Abwandlung davon, wobei einige der 1. Positionierteile 43 unterschiedliche Höhen auf-weisen.

Bei den dargestellten Ausführungsbeispielen sind die höchsten 1. Positionierteile jeweils am Ende der von den 1. Positionierteilen 43 gebildeten Reihe angeordnet. Die Höhe der 1. Positionierteile 43 nimmt zur Mitte der Reihe hin ab, wobei in der Mitte der Reihe das Positionier-teil 43 mit der geringsten Höhe angeordnet ist. Die Abstufung der Höhen der 1. Positionierteile 43 bewirkt, dass die Filament-Stränge beim Einsetzen der Halte-Kassette in die Spritzgussvorrichtung mit einem zeitliche Versatz nacheinander in die 1. Positionierschlitze 44 der 1. Positionierteile 43 eingeführt werden, wodurch die Gefahr von fehlerhaften eingesetzten Filament-Strängen verringert oder sogar vermieden ist.

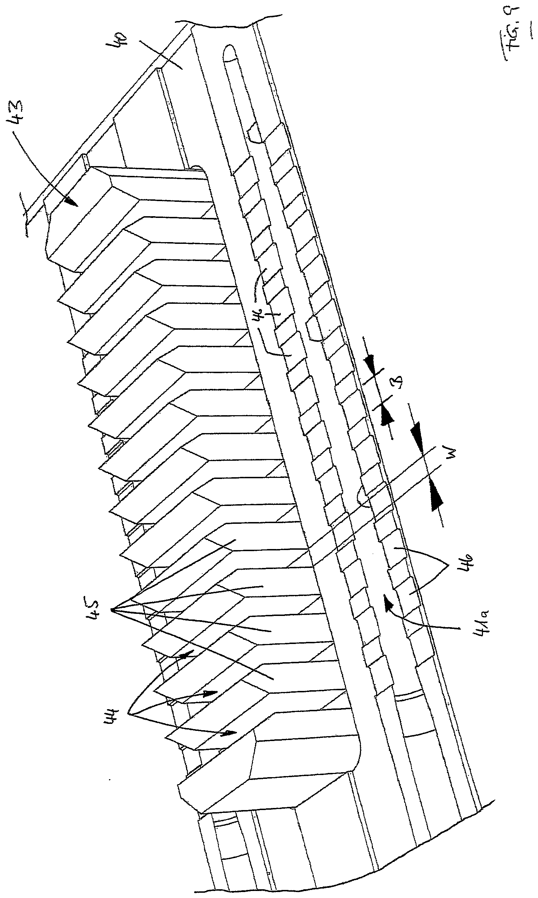

Eines der 1. Positionierteile 43 ist in Figur 9 in vergrößerter Weise dargestellt. Jedes 1. Positionierteil 43 ist rechen- oder kammförmig ausgebildet und besitzt 1. Positionierlamellen 45, die in gegenseitigem Abstand angeordnet sind und zwischen sich jeweils 1. Positionier-schlitze 44 bilden, die senkrecht zur Längserstreckung der Kavitätsabschnitte 41a bzw. der stabförmigen Träger 12 verlaufen. Die Weite der 1. Positionierschlitze 44 ist in Figur 8 mit W bezeichnet.

Unmittelbar neben den Kavitätsabschnitten 41a für die stabförmigen Träger 12 sind in dem Formteil 40 Vertiefungen 46 ausgebildet. Jeweils zwei auf entgegengesetzten Seiten eines Kavitätsabschnitts 41a ausgebildete Vertiefungen 46 fluchten miteinander und sind darüber hinaus mit den benachbarten 1. Positionierschlitzen 44 der 1. Positionierteile 43 ausgerichtet. Die Breite der Vertiefungen 46 gemessen in Längsrichtung der Kavitätsabschnitte 41a und parallel zur Weite W der 1. Positionierschlitze 44 ist in Figur 9 mit B bezeichnet. Dabei ist die Breite B der Vertiefungen 46 um 10% bis 30% größer als die Weite W der 1. Positionierschlitze.

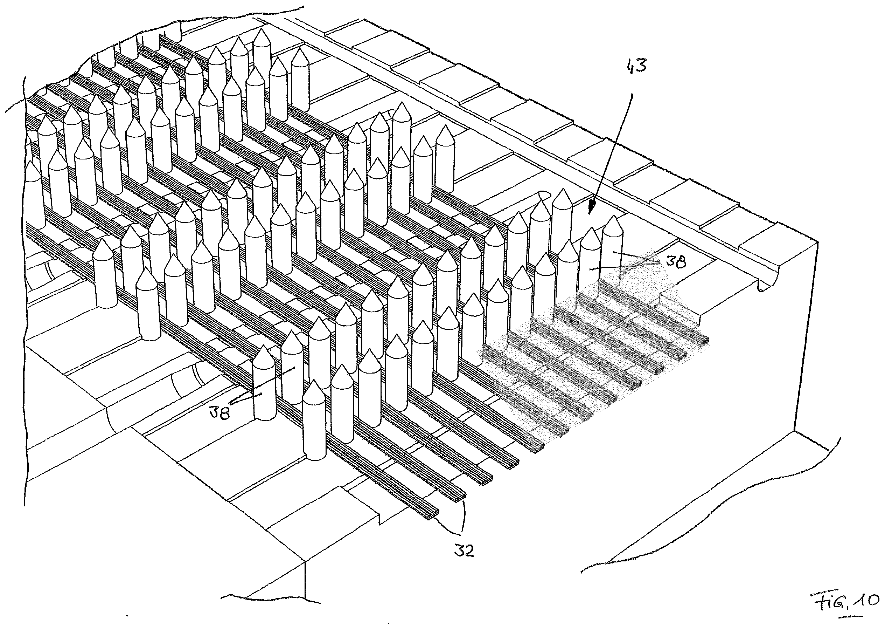

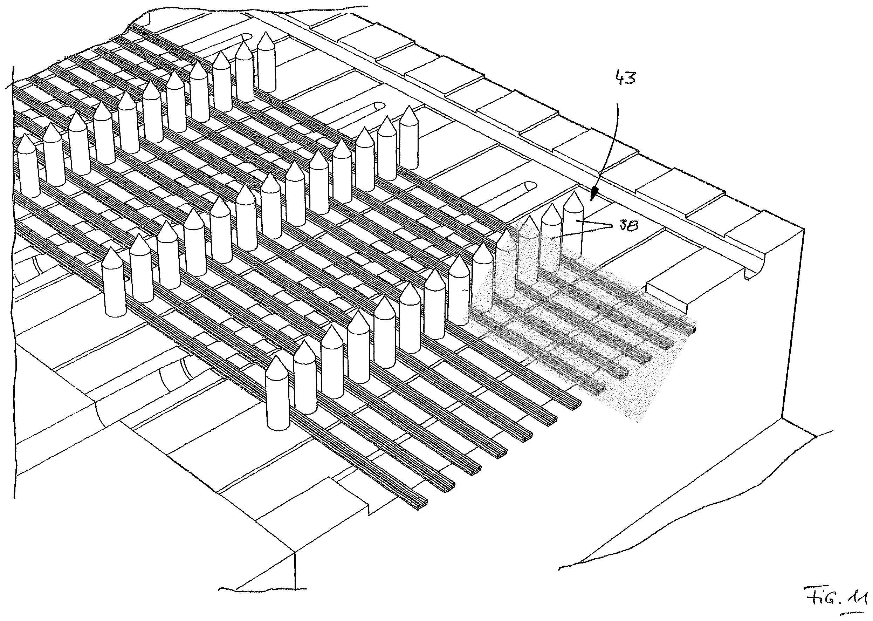

Figur 10 zeigt eine alternative Ausgestaltung der 1. Positionierteile 43, wobei diese zwar weiterhin kamm- oder rechenförmig ausgebildet sind, jedoch keine Positionierlamellen, sondern zwei parallel nebeneinander angeordnete Reihen von gleichartigen, nach oben konisch spitz zulaufenden und auf Abstand angeordneten 1. Positionierstiften 38 umfassen. Gemäß Figur 11 ist eine weitere Abwandlung vorgesehen, wobei die 1. Positionierteile 43 jeweils nur von einer einzigen Reihe entsprechender auf Abstand angeordneter 1. Positionierstifte 38 gebildet sind.

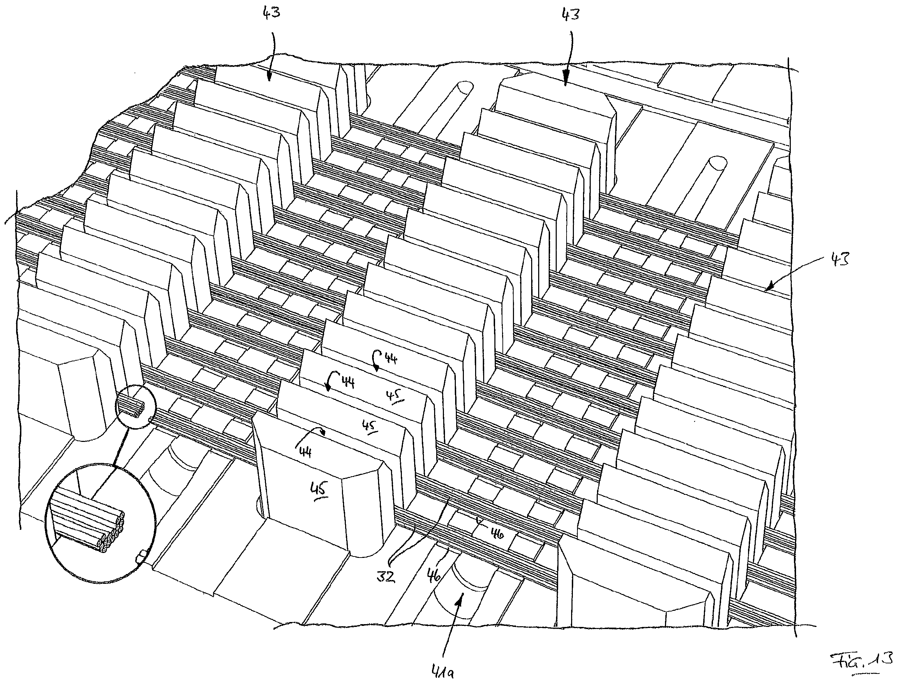

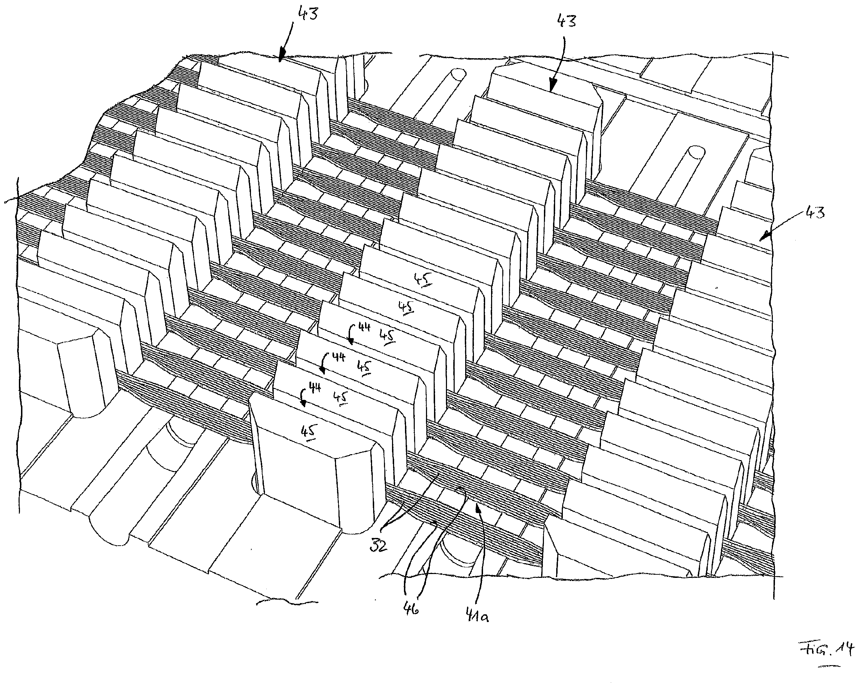

Die mit dem Filament-Feld 25 bestückte Halte-Kassette 20 wird von oben in das Formteil 40 der Spritzgussvorrichtung 39 eingesetzt. Dabei werden die Filament-Stränge 32 jeweils in einen der 1. Positionierschlitze 44 jedes 1. Positionierteils 43 eingefädelt und darüber hinaus in den Vertiefungen 46 des Formteils 40 abgelegt. Dieser Zustand ist in Figur 13 dargestellt, wobei ersichtlich ist, dass die Filament-Stränge 32 in ihrem ursprünglich frei spannenden Abschnitt zwischen den beiden Haltevorrichtungen 24 der Halte-Kassette 20 nunmehr zusätzlich jeweils auf beiden Seiten jedes Kavitätsabschnitts 41a durch 1. Positionierteile 43 auf Abstand gehalten ist. Die Dateidarstellung in Figur 13 zeigt, dass die Filament-Stränge 32 in diesem Zustand aus den einzelnen Filamenten mehrlagig aufgebaut sind und sich auch im Bereich der Vertiefungen 46 noch nicht vollständig über deren Breite verteilt sind. Dies geschieht, wenn die Spritzguss-vorrichtung 39 geschlossen wird. Dieser Zustand ist in Figur 14 dargestellt, wobei aus Gründen der Übersichtlich-keit das entsprechende Formteil der Spritzgussvorrichtung weggelassen ist. Beim Schließen der Spritzgussvorrichtung wird auf jeden Filament-Strang 32 eine Drucckraft senkrecht zur Längserstreckung der Filamente ausgeübt, wodurch sich die Filamente in den Vertiefungen 46 verteilen und unter enger Passung sowie enger Packung in den Vertiefungen 46 aufgenommen sind. Dadurch ist nicht nur eine exakte Positionierung der Filamente gegeben, sondern zusätzlich erreicht, dass das in die Kavitätsabschnitte 41a eingespritzte Kunststoff-Material nicht im Bereich der Vertiefungen 46 bzw. der Filament-Stränge 32 austreten kann.

Da die Breite B der Vertiefungen 46 größer als die Weite W der 1. Positionierschlitze 44 ist, ergibt sich die in Figur 14 dargestellte Konfiguration, dass jeder Filament-Strang 32 in demjenigen Abschnitt, der innerhalb eines 1. Positionierschlitzes 44 verläuft, in geringem Maße zusammengedrückt bzw. gequetscht und dadurch höher ausge-bildet ist, während er in dem Bereich zwischen zwei benachbarten 1. Positionierteilen 43 und somit in dem die Kavitätsabschnitte 41a überspannenden Bereich um ein größeres Maß aufgeweitet und in seinen Abmessungen durch die breiteren Vertiefungen 46 flacher geformt ist, wie es in Figur 14 dargestellt ist.

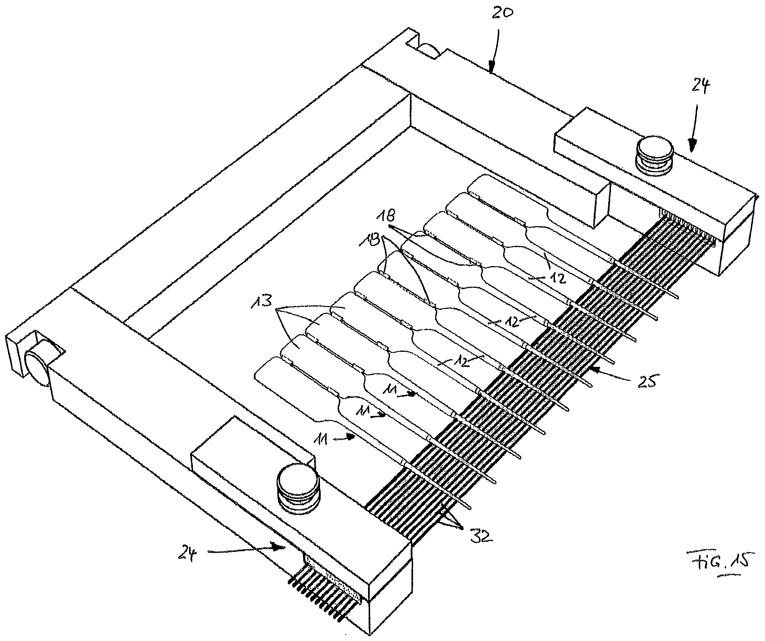

Nach dem Einlegen der mit den Filament-Strängen 32 bestückten Halte-Kassette 20 in die Spritzgussvorrichtung 39 wird diese in üblicher Weise geschlossen und in die Kavität 41 wird ein flüssiger Kunststoff eingespritzt, der die stabförmigen Träger 12, die Griffabschnitte 13 und die die Griffabschnitte 13 verbindenden Stege 18 bildet. Die Filament-Stränge 32 werden in das Kunststoff-Material der stabförmigen Träger 12 eingebettet und durchdringen somit die stabförmigen Träger 12. Nach Öffnen der Spritzgussvorrichtung 39 wird die Halte-Kassette 20 entnommen, bei der dann an dem Filament-Feld 25 zehn Interdentalreiniger 11 angeformt sind, die in ihren Griffabschnitten 13 über die Stege 18 miteinander verbunden sind. Dieser Zustand ist in Figur 15 dargestellt.

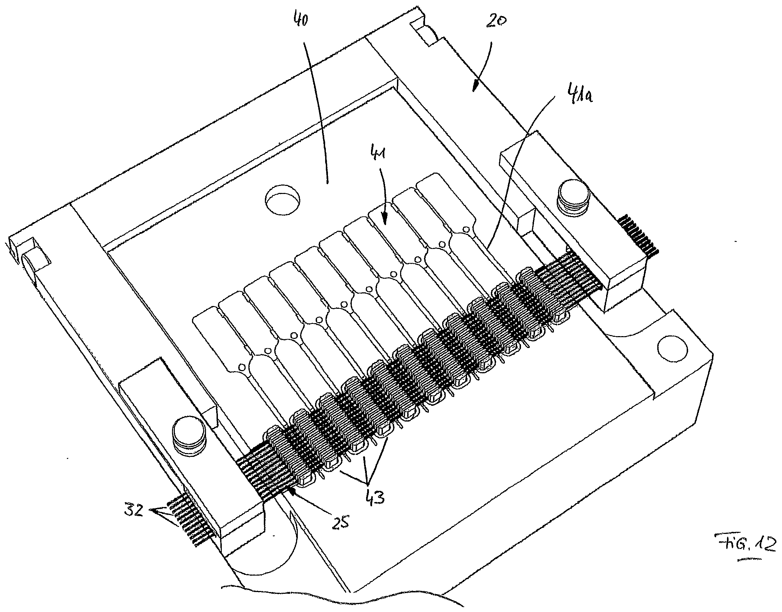

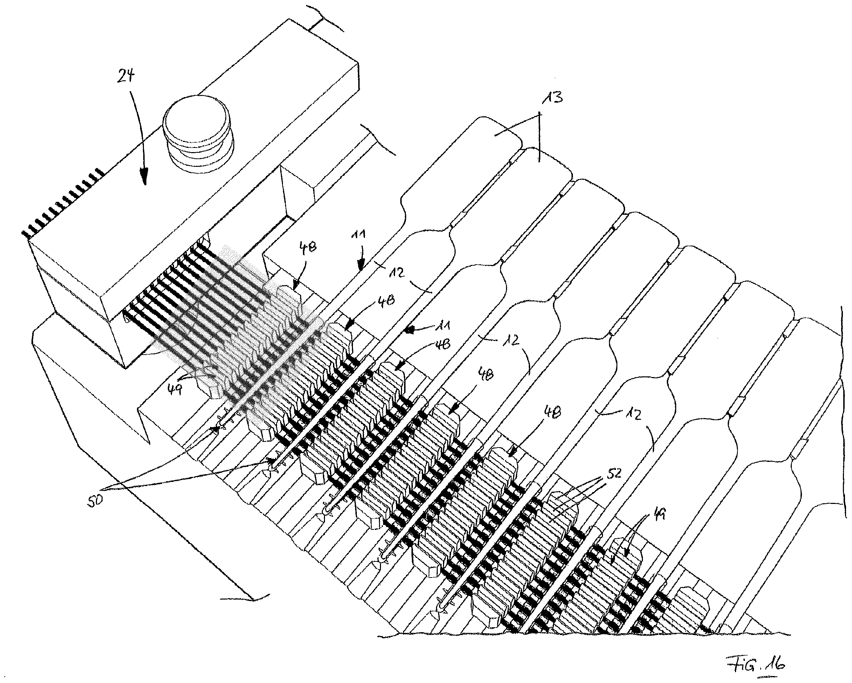

Wenn es gewünscht ist, die vorderen Abschnitte der stabförmigen Träger 12 mit dem Überzug 16 aus einem weich-elastischen Kunststoff, beispielsweise einem thermo-plastischem Elastomer zu überspritzen, werden entsprechende Überzüge 16 in einem nachfolgenden Verfahrensschritt an die stabförmigen Träger 12 angespritzt. Dies kann entweder in der gleichen Spritzgussvorrichtung 39, jedoch in einem anderen oder verstellten Formteil, oder in einer weiteren Spritzgussvorrichtung 47 erfolgen. Im vorliegenden Fall soll beispielhaft davon ausgegangen werden, dass eine weitere Spritzgussvorrichtung 47 vorgesehen ist, wie es in Figur 16 dargestellt ist. Diese besitzt eine Umspritzungs-kavität 50 entsprechend der Form der zehn anzuspritzenden Überzüge 16. Zusätzlich besitzt die weitere Spritzguss-vorrichtung 47 mehrere 2. Positionierteile 48, die entsprechen den 1. Positionierteilen 43 der Spritzguss-vorrichtung 39 kamm- bzw. rechenförmig ausgebildet sind, wobei das Filament-Feld 25 mit den zehn stabförmigen Trägern 12 derart in der Umspritzungskavität 50 positioniert wird, dass jeder Filament-Strang 32 in jeweils einen zwischen 2. Positionierlamellen 52 gebildeten 2. Positionierschlitz 49 der 2. Positionierteile 48 einge-fädelt und dadurch positioniert ist. Dieser Zustand ist in Figur 12 dargestellt.

Der konstruktive Aufbau der 2. Positionierteile 48 entspricht dem konstruktiven Aufbau der 1. Positionierteile 43, worauf zwecks Vermeidung von Wiederholungen verwiesen werden soll.

Nachdem die Halte-Kassette 20 mit dem Filament-Feld 25 und den daran gehaltenen stabförmigen Trägern 12 in die Umspritzungskavität 50 bzw. die weitere Spritzgussvorrichtung 47 eingesetzt ist, wird diese geschlossen und es wird der weich-elastische Kunststoff eingespritzt, der jeden den stabförmigen Träger 12 jedes Interdentalreinigers 11 mit einem vorderseitigen Überzug 16 versieht, der radial außenseitige Finger besitzt.

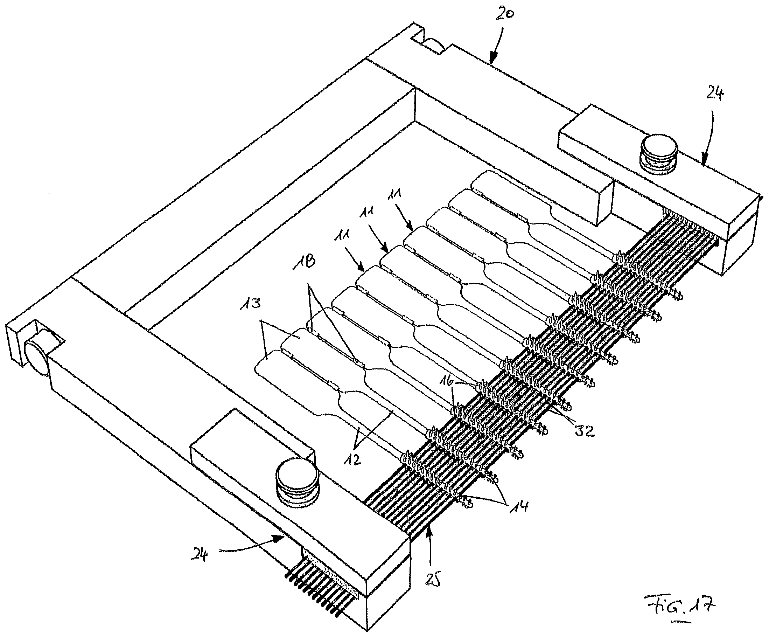

Nach Öffnen der weiteren Spritzgussvorrichtung 47 wird die Halte-Kassette 20 entnommen. Dieser Zustand ist in Figur 17 dargestellt. Hierbei sind alle Interdentalreiniger 11 noch sowohl über die Stege 18 im Bereich ihrer Griffabschnitte 13 als auch über die Filament-Stränge 32 im Bereich ihrer Reinigungsabschnitte 14 miteinander verbunden.

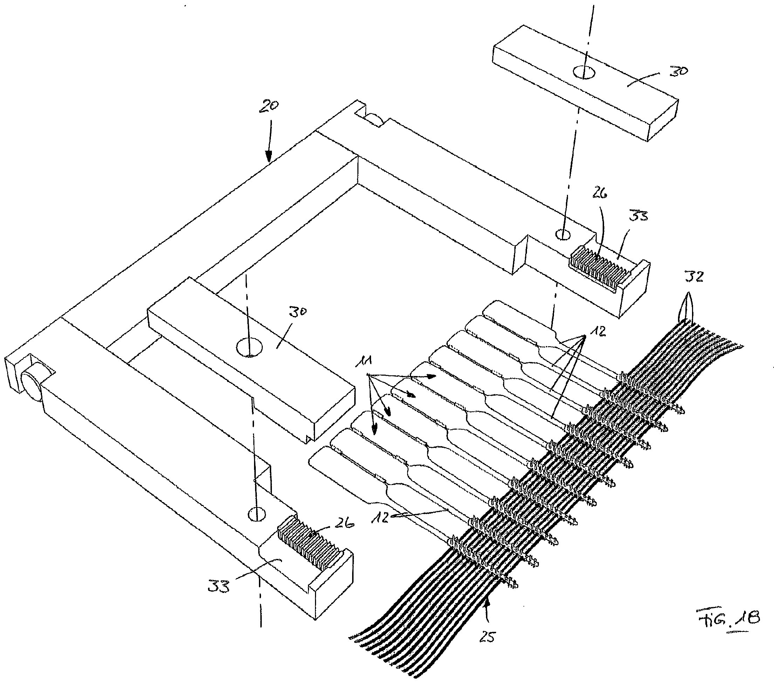

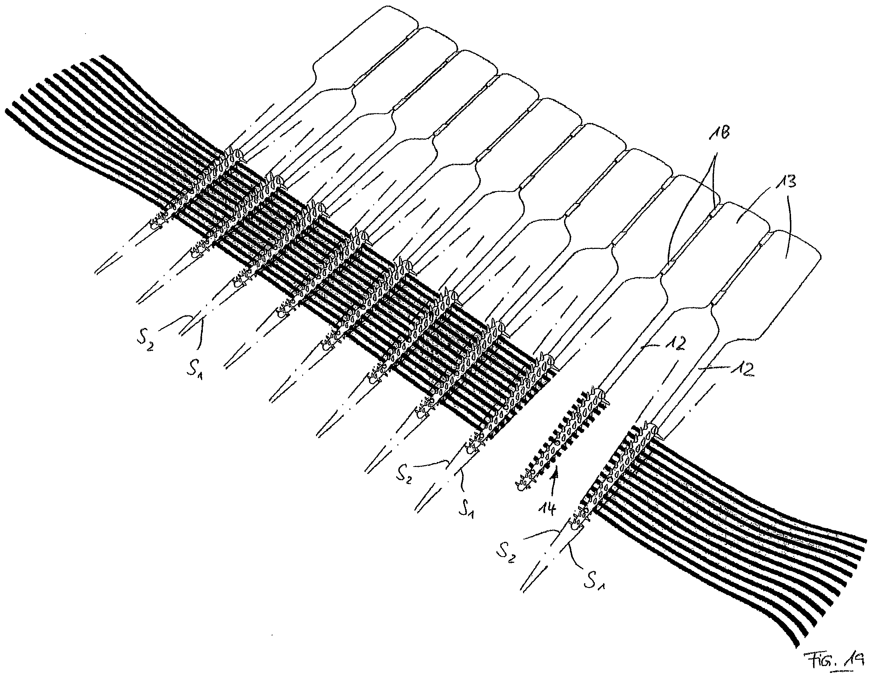

Anschließend werden die Halte-Vorrichtungen 24, die das Filament-Feld 25 in der Halte-Kassette 20 festklemmen, geöffnet (siehe Figur 18) und die Gruppe 10 von zehn Interdentalreinigern 11 und dem Filament-Feld 25 wird entnommen und einer Schneidestation zugeführt, die in Figur 19 nur angedeutet ist. In der Schneidestation wird jeder stabförmige Träger 12 im Bereich seines Reinigungsabschnittes 14 durch zwei auf verschiedenen Seiten verlaufende Schnitte S₁ und S₂, die unter einen spitzen Winkel in Richtung des vorderen Endes des Interdentalreinigers 11 zusammenlaufen, aus dem Filament-Feld 25 herausgeschnitten. Es ergibt sich damit der bereits im Zusammenhang mit Figur 1 erläuterte Reinigungsabschnitt 14 des Interdentalreinigers 11 mit einem Borstenbesatz aus auf entgegengesetzten Seiten hervorstehende Borsten 15 und einen Überzug 16 mit radial hervorstehenden Fingern 17. Über die Stege 18 sind die Interdentalreingier 11 noch miteinander verbunden und bilden die in Figur 1 dargestellte Gruppe 10.

Die in der vorstehenden Beschreibung, den Ansprüchen und der Zeichnung offenbarten Merkmale der Erfindung können sowohl einzeln als auch in beliebiger Kombination für die Verwirklichung der Erfindung in ihren verschiedenen Ausführungen von Bedeutung sein.

## Patentansprüche

1. Vorrichtung zur Herstellung eines Interdentalreinigers (11), der einen stabförmigen Träger (12) aus Kunststoff aufweist, in den seitlich hervorstehende Borsten (15) eingebettet sind,
mit einer Spritzgussvorrichtung (39), die zumindest eine Kavität (41) für die Ausbildung mehrerer nebeneinander angeordneter stabförmiger Träger (12) und eine Haltevorrichtung (24) für ein aus mehreren Filament-Strängen (32) gebildetes Filament-Feld (25) aufweist, wobei die Haltevorrichtung (24) eine Halte-Kassette (20) mit zumindest zwei voneinander beabstandeten Führungsteilen (26) aufweist, in die die Filament-Stränge (32) einsetzbar sind, wobei die Filament-Stränge (32) in der Haltevorrichtung (24) so fixierbar sind, dass sie zwischen den Führungsteilen (26) frei spannbar sind, und
wobei die Halte-Kassette (20) in die Spritzgussvorrichtung (39) einsetzbar und aus dieser entnehmbar und/oder in dieser umsetzbar ist,
**dadurch gekennzeichnet, dass** eine Positioniervorrichtung (42) zur Positionierung und Führung der Filament-Stränge (32) in der Spritzgussvorrichtung (39) mehrere voneinander beabstandete 1. Positionierteile (43) aufweist.

2. Vorrichtung nach Anspruch 1, **dadurch gekennzeichnet, dass** jedes 1. Positionierteil (43) mehrere nebeneinander angeordnete 1. Positionierschlitze (44) aufweist.

3. Vorrichtung nach Anspruch 2, **dadurch gekennzeichnet, dass** jeder 1. Positionierschlitz (44) zur Aufnahme genau eines Filament-Strangs (32) ausgebildet ist.

4. Vorrichtung nach einem der Ansprüche 1 bis 3, **dadurch gekennzeichnet, dass** die Kavität (41) der Spritzgussvorrichtung (39) mehrere Kavitätsabschnitte (41a) zur Ausbildung jeweils eines stabförmigen Trägers (12) besitzt und dass zwischen zwei benachbarten Kavitätsabschnitten (41a) jeweils zumindest ein 1. Positionierteil (43) vorgesehen ist.

5. Vorrichtung nach nach einem der Ansprüche 1 bis 4, **dadurch gekennzeichnet, dass** zumindest einige der 1. Positionierteile (43) eine unterschiedliche Höhe aufweisen.

6. Vorrichtung nach Anspruch 5, **dadurch gekennzeichnet, dass** jeder Kavitätsabschnitt (41a) zur Ausbildung jeweils eines stabförmigen Trägers (12) mehrere Vertiefungen (46) zur Aufnahme jeweils eines Filament-Strangs (32) besitzt.

7. Vorrichtung mach Anspruch 6, **dadurch gekennzeichnet, dass** eine Breite B der Vertiefungen (46) größer als eine Weite W der 1. Positionierschlitze (44) ist.

8. Vorrichtung nach Anspruch 7, **dadurch gekennzeichnet, dass** die Spritzgussvorrichtung (39) oder eine weitere Spritzgussvorrichtung (47) eine Umspritzungskavität (50) aufweist, in der die stabförmigen Träger (12) im Bereich des Filament-Feldes (25) zumindest bereichsweise mit einem Kunststoff umspritzbar sind, wobei die Umspritzungskavität (50) mehrere Kavitätsabschnitte (50a) zur Bildung jeweils eines Überzugs besitzt und wobei mehrere voneinander beabstandete 2. Positionierteile (48) vorgesehen sind.

9. Verfahren zur Herstellung eines Interdentalreinigers (11), der einen stabförmigen Träger (12) aus Kunststoff aufweist, in den seitlich hervorstehende Borsten (15) eingebettet sind,
wobei ein Filament-Feld (25) aus mehreren Filament-Strängen (32) in eine Halte-Kassette (20) eingesetzt und mittels zumindest einer Haltevorrichtung (24) in vorbestimmter Ausrichtung in der Halte-Kassette (20) fixiert wird,
anschließend die Halte-Kassette (20) in eine Spritzgussvorrichtung (39) eingesetzt und das Filament-Feld (25) in der Spritzgussvorrichtung (39) unter Bildung von mehreren auf Abstand nebeneinander angeordneten stabförmigen Trägern (12) mit Kunststoff umspritzt wird, und
wobei die das Filament-Feld (25) bildenden Filament-Stränge (32) zumindest in den zwischen benachbarten stabförmigen Trägern (12) liegenden Abschnitten durchtrennt werden,
**dadurch gekennzeichnet, dass** jeder Filament-Strang (32) des Filament-Feldes (25) beim Einsetzen der Halte-Kassette (20) in die Spritzgussvorrichtung (39) in mehrere voneinander beabstandete, an der Spritzgussvorrichtung (39) ausgebildete 1. Positionierteile (43) eingesetzt wird.

10. Verfahren nach Anspruch 9, **dadurch gekennzeichnet, dass** jedes 1. Positionierteil (43) mehrere 1. Positionierschlitze (44) aufweist, wobei jeder Filament-Strang (32) in einen der 1. Positionierschlitze (44) der Positionierteile (43) eingesetzt wird.

11. Verfahren nach einem der Ansprüche 9 oder 10, **dadurch gekennzeichnet, dass** jeder Filament-Strang (32) in zumindest zwei beabstandeten Bereichen seiner axialen Länge jeweils in ein Führungsteil (26) eingesetzt und so fixiert wird, dass er zwischen den Führungsteilen (26) frei gespannt ist.

12. Verfahren nach Anspruch 11, **dadurch gekennzeichnet, dass** das Führungsteil (26) mehrere Führungsschlitze (27) aufweist, wobei jeder Filament-Strang (23) in einen der Führungsschlitze (27) eingesetzt wird.

13. Verfahren nach einem der Ansprüche 9 bis 12, **dadurch gekennzeichnet, dass** die Halte-Kassette (20) mit dem die stabförmigen Träger (12) tragenden Filament-Feld (25) in der Spritzgussvorrichtung (39) umgesetzt oder in eine weitere Spritzgussvorrichtung (47) eingesetzt wird und dass die stabförmigen Träger (12) dort im Bereich des Filament-Feldes (25) zumindest bereichsweise mit einem weich-elastischen Kunststoff, insbesondere einem thermoplastischen Elastomer oder Silikon, unter Bildung eines Überzugs (16) umspritzt werden.

14. Verfahren nach Anspruch 13, **dadurch gekennzeichnet, dass** jeder Filament-Strang (32) des Filament-Feldes (25) beim Ein- oder Umsetzen der Halte-Kassette (20) in mehrere voneinander beabstandete, an der Spritzgussvorrichtung (39) oder der weiteren Spritzgussvorrichtung (47) ausgebildete 2. Positionierteile (48) eingesetzt wird.

15. Verfahren nach Anspruch 14, **dadurch gekennzeichnet, dass** jedes 2. Positionierteil (48) mehrere 2. Positionierschlitze (49) aufweist, wobei jeder Filament-Strang (32) in einen der 2. Positionierschlitze (49) der 2. Positionierteile (48) eingesetzt wird.

## Claims

1. Device for producing an interdental cleaner (11) that has a rod-like carrier (12) made of plastic, in which laterally protruding bristles (15) are embedded,
having an injection-moulding device (39), which has at least one cavity (41) for forming a plurality of rod-like carriers (12) arranged alongside one another and a holding device (24) for a filament zone (25) formed from a plurality of filament strands (32),
wherein the holding device (24) has a holding cassette (20) with at least two spaced-apart guide parts (26) into which the filament strands (32) are insertable, wherein the filament strands (32) are able to be fixed in the holding device (24) such that they are freely stretchable between the guide parts (26), and
wherein the holding cassette (20) is insertable into the injection-moulding device (39) and removable therefrom and/or repositionable therein, **characterized in that** a positioning device (42) for positioning and guiding the filament strands (32) in the injection-moulding device (39) has a plurality of spaced-apart first positioning parts (43) .

2. Device according to Claim 1, **characterized in that** each first positioning part (43) has a plurality of first positioning slots (44) arranged alongside one another.

3. Device according to Claim 2, **characterized in that** each first positioning slot (44) is configured to receive exactly one filament strand (32).

4. Device according to one of Claims 1 to 3, **characterized in that** the cavity (41) of the injection-moulding device (39) has a plurality of cavity portions (41a) for forming in each case one rod-like carrier (12), and **in that** in each case at least one first positioning part (43) is provided between two adjacent cavity portions (41a).

5. Device according to one of Claims 1 to 4, **characterized in that** at least some of the first positioning parts (43) have a different height.

6. Device according to Claim 5, **characterized in that** each cavity portion (41a), for forming in each case one rod-like carrier (12), has a plurality of recesses (46) for receiving in each case one filament strand (32).

7. Device according to Claim 6, **characterized in that** a width B of the recesses (46) is greater than a breadth W of the first positioning slots (44).

8. Device according to Claim 7, **characterized in that** the injection-moulding device (39) or a further injection-moulding device (47) has an overmoulding cavity (50) in which the rod-like carriers (12) are able to be overmoulded at least regionally with a plastic in the region of the filament zone (25), wherein the overmoulding cavity (50) has a plurality of cavity portions (50a) for forming in each case one coating and wherein a plurality of spaced-apart second positioning parts (48) are provided.

9. Method for producing an interdental cleaner (11) that has a rod-like carrier (12) made of plastic, in which laterally protruding bristles (15) are embedded,
wherein a filament zone (25) made up of a plurality of filament strands (32) is inserted into a holding cassette (20) and is fixed in the holding cassette (20) in a predetermined orientation by means of at least one holding device (24),
subsequently, the holding cassette (20) is inserted into an injection-moulding device (39) and the filament zone (25) is overmoulded with plastic in the injection-moulding device (39), forming a plurality of rod-like carriers (12) arranged alongside one another in a spaced-apart manner, and
wherein the filament strands (32) forming the filament zone (25) are severed at least in the portions located between adjacent rod-like carriers (12),
**characterized in that**, when the holding cassette (20) is inserted into the injection-moulding device (39), each filament strand (32) of the filament zone (25) is inserted into a plurality of spaced-apart first positioning parts (43) formed on the injection-moulding device (39).

10. Method according to Claim 9, **characterized in that** each first positioning part (43) has a plurality of first positioning slots (44), wherein each filament strand (32) is inserted into one of the first positioning slots (44) of the positioning parts (43).

11. Method according to either of Claims 9 and 10, **characterized in that** each filament strand (32) is inserted in each case into a guide part (26) in at least two spaced-apart regions of its axial length and is fixed such that it is freely stretched between the guide parts (26).

12. Method according to Claim 11, **characterized in that** the guide part (26) has a plurality of guide slots (27), wherein each filament strand (23) is inserted into one of the guide slots (27).

13. Method according to one of Claims 9 to 12, **characterized in that** the holding cassette (20) with the filament zone (25) carrying the rod-like carriers (12) is repositioned in the injection-moulding device (39) or is inserted into a further injection-moulding device (47), and **in that** the rod-like carriers (12) are overmoulded therein at least regionally with a soft-elastic plastic, in particular a thermoplastic elastomer or silicone, forming a coating (16), in the region of the filament zone (25).

14. Method according to Claim 13, **characterized in that** each filament strand (32) of the filament zone (25), upon insertion or repositioning of the holding cassette (20), is inserted into a plurality of spaced-apart second positioning parts (48) formed on the injection-moulding device (39) or the further injection-moulding device (47).

15. Method according to Claim 14, **characterized in that** each second positioning part (48) has a plurality of second positioning slots (49), wherein each filament strand (32) is inserted into one of the second positioning slots (49) of the second positioning parts (48).

## Revendications

1. Dispositif de fabrication d'un nettoyeur inter-dentaire (11) comportant un support en forme de tige (12) en matière plastique dans lequel des soies (15) saillant en côté sont encastrées ;
avec un dispositif de moulage par injection (39), l'au moins une cavité (41) servant à former plusieurs supports en forme de tige (12) disposés côte à côte et un dispositif de maintien (24) pour un champ de filaments (25) constitué de plusieurs faisceaux de filaments (32), le dispositif de maintien (24) comportant une cassette de maintien (20) dotée d'au moins deux parties de guidage (26) espacées l'une par rapport à l'autre dans lesquelles les faisceaux de filaments (32) peuvent être insérés, les faisceaux de filaments (32) pouvant être fixés de telle sorte dans le dispositif de maintien (24) qu'ils peuvent être librement tendus entre les parties de guidage (26) ; et
la cassette de maintien (20) pouvant être insérée dans le dispositif de moulage par injection (39) et pouvant en être retirée et/ou y être déplacée ;
**caractérisé en ce qu'**un dispositif de positionnement (42) comporte plusieurs 1^{res} parties de positionnement (43) espacées les unes par rapport aux autres pour le positionnement et le guidage des faisceaux de filaments (32) dans le dispositif de moulage par injection (39).

2. Dispositif selon la revendication 1, **caractérisé en ce que** chaque 1^{re} partie de positionnement (43) comporte plusieurs 1^{res} fentes de positionnement (44) disposées côte à côte.

3. Dispositif selon la revendication 2, **caractérisé en ce que** chaque 1^{re} fente de positionnement (44) est réalisée de façon à recevoir précisément un faisceau de filaments (32).

4. Dispositif selon l'une quelconque des revendications 1 à 3, **caractérisé en ce que** la cavité (41) du dispositif de moulage par injection (39) possède plusieurs sections de cavité (41a) servant à former respectivement un support en forme de tige (12) et que respectivement au moins une 1^{re} partie de positionnement (43) est prévue entre deux sections de cavité (41a) connexes.

5. Dispositif selon l'une quelconque des revendications 1 à 4, **caractérisé en ce qu'**au moins quelques-unes des 1^{res} parties de positionnement (43) présentent une hauteur différente.

6. Dispositif selon la revendication 5, **caractérisé en ce que** chaque section de cavité (41a) servant à former respectivement un support en forme de tige (12) possède plusieurs renfoncements (46) permettant de loger respectivement un faisceau de filaments (32).

7. Dispositif selon la revendication 6, **caractérisé en ce qu'**une largeur B des renfoncements (46) est supérieure à une largeur intérieure W des 1^{res} fentes de positionnement (44).

8. Dispositif selon la revendication 7, **caractérisé en ce que** le dispositif de moulage par injection (39) ou un autre dispositif de moulage par injection (47) comporte une cavité d'extrusion (50) dans laquelle les supports en forme de tige (12) sont au moins en partie extrudés avec une matière plastique dans la région du champ de filaments (25), la cavité d'extrusion (50) possédant plusieurs sections de cavité (50a) pour la formation respectivement d'un dépôt et plusieurs 2^{e} parties de positionnement (48) espacées les unes par rapport aux autres étant prévues.

9. Procédé de fabrication d'un nettoyeur inter-dentaire (11) comportant un support en forme de tige (12) en matière plastique dans lequel des soies (15) saillant en côté sont encastrées ;
un champ de filaments (25) constitué de plusieurs faisceaux de filaments (32) étant inséré dans une cassette de maintien (20) et étant fixé selon une orientation prédéfinie dans la cassette de maintien (20) à l'aide d'au moins un dispositif de maintien (24) ;
la cassette de maintien (20) étant ensuite insérée dans un dispositif de moulage par injection (39) et le champ de filaments (25) étant extrudé avec de la matière plastique dans le dispositif de moulage par injection (39) en formant plusieurs supports en forme de tige (12) disposés côte à côte à une certaine distance les uns des autres ; et
les faisceaux de filaments (32) formant le champ de filaments (25) étant séparés au moins dans les sections situées entre les supports en forme de tige (12) connexes ;
**caractérisé en ce que** chaque faisceau de filaments (32) du champ de filaments (25) est inséré dans plusieurs 1^{res} parties de positionnement (43) réalisées au niveau du dispositif de moulage par injection (39) et espacées les unes par rapport aux autres lors de l'insertion de la cassette de maintien (20) dans le dispositif de moulage par injection (39).

10. Procédé selon la revendication 9, **caractérisé en ce que** chaque 1^{re} partie de positionnement (43) comporte plusieurs 1^{res} fentes de positionnement (44), chaque faisceau de filaments (32) étant inséré dans une des 1^{res} fentes de positionnement (44) des parties de positionnement (43).

11. Procédé selon l'une quelconque des revendications 9 ou 10, **caractérisé en ce que** chaque faisceau de filaments (32) est respectivement inséré dans une partie de guidage (26), dans au moins deux régions espacées l'une par rapport à l'autre de sa longueur axiale, et fixé de telle sorte qu'il est tendu librement entre les parties de guidage (26).

12. Procédé selon la revendication 11, **caractérisé en ce que** la partie de guidage (26) comporte plusieurs fentes de guidage (27), chaque faisceau de filaments (23) étant inséré dans une des fentes de guidage (27).

13. Procédé selon l'une quelconque des revendications 9 à 12, **caractérisé en ce que** la cassette de maintien (20) est déplacée dans le dispositif de moulage par injection (39) avec le champ de filaments (25) supportant les supports en forme de tige (12) ou est insérée dans un autre dispositif de moulage par injection (47) et que les supports en forme de tige (12) sont extrudés dans la région du champ de filaments (25) par formation d'un dépôt (16) au moins en partie avec une matière plastique élastique molle, notamment un élastomère thermoplastique ou un silicone.

14. Procédé selon la revendication 13, **caractérisé en ce que** chaque faisceau de filaments (32) du champ de filaments (25) est utilisé lors de l'insertion ou du déplacement de la cassette de maintien (20) dans plusieurs 2^{e} parties de positionnement (48) espacées les unes par rapport aux autres et réalisées au niveau du dispositif de moulage par injection (39) ou de l'autre dispositif de moulage par injection (47).

15. Procédé selon la revendication 14, **caractérisé en ce que** chaque 2^{e} partie de positionnement (48) comporte plusieurs 2^{e} fentes de positionnement (49), chaque faisceau de filaments (32) étant inséré dans les 2^{e} fentes de positionnement (49) des 2^{e} parties de positionnement (48).
